# FASCICULE DE BREVET EUROPEEN

(11) **EP 3 563 528 B1**
(45) Date de publication et mention de la délivrance du brevet: **06.01.2021**
(21) Numéro de dépôt: 17817775.4
(22) Date de dépôt: 28.11.2017
(51) Int. Cl.: H04L 12/58

(54) **COURRIER ELECTRONIQUE DYNAMIQUE POUR BOITE PERSONNELLE DE MESSAGERIE**
DYNAMISCHE ELEKTRONISCHE POST FÜR PERSÖNLICHEN BRIEFKASTEN
DYNAMIC ELECTRONIC MAIL FOR PERSONAL MAILBOX

(30) Priorité: 29.12.2016 FR 1663490
(43) Date de publication de la demande: 06.11.2019
(73) Titulaire: Worldline, 95870 Bezons (FR)
(72) Inventeur: LANEL, Jean-Baptiste, 59700 Marcq En Baroeuil (FR); DEPREZ, Claire, 59147 Herrin (FR); DASSONVILLE, Matthieu, 59350 Saintandre Lez Lille (FR)
(74) Mandataire: Novagraaf Technologies
(86) Numéro de dépôt international: PCT/FR2017/053118
(87) Numéro de publication internationale: WO 2018/122477

(56) Documents cités:
- US-A1- 2007 011 265
- US-A1- 2007 025 340
- US-B1- 6 507 865

## Description

### DOMAINE DE L'INVENTION

L'invention concerne le domaine du courrier électronique. Elle concerne plus particulièrement l'affichage d'un contenu dynamique dans un courrier électronique consulté par le récepteur en accédant à une boîte personnelle distante.

### CONTEXTE DE L'INVENTION

Il peut être intéressant pour un émetteur de définir un contenu dynamique aux courriers électroniques qu'il envoie. Cela peut notamment être le cas des lettres d'information (ou « *newsletter »* en anglais) qu'il diffuse périodiquement auprès d'un réseau de contact. Ce contenu dynamique peut permettre d'adapter un même courrier électronique à des circonstances qui peuvent dépendre du récepteur, du moment auquel celui-ci accède au courrier, etc.

La mise en place d'un contenu dynamique peut reposer sur l'appel à des applications tierces, ou à du code exécutable (flash, javascript...), qui peuvent avoir connaissance de ces circonstances et en faire dépendre le contenu à afficher.

US6507865 décrit un tel mécanisme consistant à intégrer le contenu dynamique dans le corps du message
Pour une grande part, les courriers électroniques sont consultés en accédant à une boîte personnelle qui est hébergée sur un serveur distant. L'accès peut se faire via le web via une interface de type « *webmail* », mais également, depuis un terminal de communication mobile, vers une application mobile spécifique.

Les hébergeurs de ces boîtes personnelles mettent habituellement en œuvre des mécanismes de sécurité afin d'éviter les cyber-menaces. Ainsi, les appels vers des composants externes sont généralement bloqués, en dehors des images. Il en va de même de l'utilisation de codes exécutables tels que Javascript, Flash, etc.

Par conséquent, le contenu des courriers électroniques ne peut être que statique : même si le courrier électronique contient de tels éléments dynamiques, ceux-ci seront bloqués et ne pourront donc pas être visualisés par le récepteur qui ne recevra donc que les éléments statiques du courrier électronique.

Une autre possibilité est d'insérer des liens vers les applications tierces mettant en œuvre le contenu dynamique, dans le corps du courrier électronique. En général, cette pratique est tout à fait admise par les hébergeurs de boites personnelles, mais il n'y a aucune garantie que le récepteur cliquera effectivement sur le lien afin d'accéder aux éléments dynamiques.

### RESUME DE L'INVENTION

Le but de la présente invention est de fournir une solution palliant au moins partiellement les inconvénients précités.

Plus particulièrement, l'invention vise à fournir un procédé permettant l'affichage d'un contenu dynamique d'un courrier électronique lorsque le récepteur le consulte en accédant à sa boîte personnelle. Ce contenu dynamique peut être personnalisé et contextualisé.

A cette fin, la présente invention propose un procédé de transmission d'un courrier électronique selon la revendication 1.

Suivant des modes de réalisation préférés, l'invention comprend une ou plusieurs des caractéristiques suivantes qui peuvent être utilisées séparément ou en combinaison partielle entre elles ou en combinaison totale entre elles :
- ladite application tierce fournit un contenu fonction d'un paramètre parmi la date, un profil dudit récepteur, des données météorologiques, un événement, un accès à des données appartenant au récepteur, ...
- ledit contenu permet une interaction avec ledit récepteur ;
- le serveur gérant ladite boîte personnelle transmet un élément d'authentification dudit récepteur à ladite application tierce ;
- ledit indicateur est crypté par ledit émetteur au moyen d'un secret partagé préalablement fourni par ledit serveur gérant ladite boîte personnelle ;
- ledit récepteur peut accéder à une liste des courriers électroniques disponibles dans ladite boîte personnelle, dans laquelle un pictogramme est affiché en regard des courriers électroniques dans lesquels a été inséré un indicateur contenant l'adresse d'une application tierce ;

Un autre objet de l'invention concerne un programme d'ordinateur comportant du code exécutable par un équipement numérique pour mettre en œuvre le procédé tel que précédemment décrit.

Un autre objet de l'invention concerne un serveur gestionnaire d'une boite personnelle selon la revendication 8.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

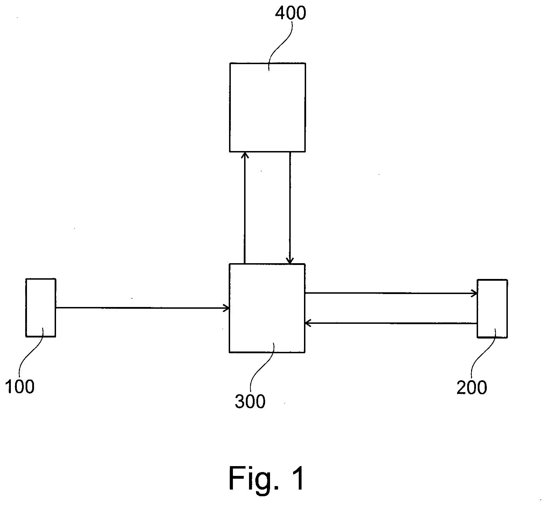

La figure 1 représente schématiquement un exemple de mise en œuvre de l'invention.

### DESCRIPTION DETAILLEE DE L'INVENTION

L'invention s'applique particulièrement bien à la situation d'un émetteur qui souhaite diffuser une lettre d'information vers un grand nombre de récepteurs. Il peut par exemple s'agir d'une société commerciale qui souhaite diffuser des informations vers sa base de clients ou de prospects.

Cet émetteur peut alors entrer en contact avec les hébergeurs de boites personnelles afin de mettre en place le mécanisme selon l'invention. Ces boites personnelles peuvent être de type « messagerie web », ou des applications mobiles de courrier électronique.

Une messagerie web, ou « *webmail* » en langue anglaise, est une interface entre un serveur de messagerie et un navigateur web. Elle permet donc l'accès aux courriers électroniques au moyen des protocoles du web, tels que ceux de la famille HTTP (pour « HyperText Transfer Protocol »). Le récepteur peut donc accéder à ses courriers électroniques stockées dans sa boite personnelle de messagerie, hébergée par un serveur, au moyen d'un terminal de communication (ordinateur fixe ou portable, terminal mobile, tablette, etc.). Ce serveur est une entité fonctionnelle comportant un serveur web et d'éventuels autres mécanismes. Selon l'invention, le serveur comporte des moyens de gestion particuliers, lui permettant de gérer des courriers électroniques mécaniques, qui peuvent être mis en œuvre de façon logicielle, de façon classique en soi et accessible à l'homme du métier.

Les différents traitements liés aux courriers électroniques sont donc pris en charge par le serveur gérant la boîte personnelle, et le récepteur ne fait qu'interagir avec sa boite pour consulter ou agir sur ses courriers.

La mise en contact entre l'hébergeur de la boite personnelle et l'émetteur peut permettre à l'hébergeur de fournir un secret partagé à l'émetteur, qui peut être sous la forme d'une clé. L'émetteur peut alors utiliser cette clé pour une ou plusieurs campagnes, chaque campagne se caractérisant par l'émission d'un courrier électronique vers un ensemble de récepteurs. Pour ce faire, une application peut être mise à disposition de l'émetteur.

La figure 1 illustre un exemple de mise en œuvre de l'invention. Dans cet exemple, l'émetteur 100 souhaite transmettre un courrier électronique dynamique à un récepteur 200 qui utilise une boîte personnelle 300, hébergée par un serveur.

On suppose que l'émetteur est préalablement entré en contact avec l'hébergeur de la boîte personnelle de messagerie 300 afin d'obtenir un secret partagé. Il est toutefois à noter que l'invention peut être mise en œuvre dans sa généralité sans l'utilisation d'un secret partagé, mais que celui-ci présente des avantages supplémentaires pour la sécurisation du mécanisme selon l'invention.

En outre, la boite personnelle, ou plus précisément le serveur gérant la boîte personnelle, peut mettre en œuvre d'autres mécanismes de sécurisation. Par exemple, une liste blanche peut être préalablement définie, identifiant des émetteurs autorisés. Le contenu dynamique des courriers électroniques provenant d'un émetteur n'appartenant pas à cette liste blanche est alors bloqué.

Le courrier électronique est stocké dans la boîte personnelle 300. De façon connue en soi, le récepteur 200 peut accéder à sa boite personnelle après identification. Cette identification peut être effectuée en saisissant un identifiant (ou « login ») et un mot de passe, ou bien par la transmission d'un certificat, etc.

Comme dit précédemment, il peut utiliser un navigateur web afin de visualiser la liste des courriers électroniques disponibles et d'en afficher le contenu.

A partir d'un terminal de communication mobile, de type « smartphone », il peut de même se connecter à une application mobile de messagerie.

Lorsque le récepteur accède au courrier électronique, le serveur gérant la boîte personnelle 300 déclenche à sa lecture l'exécution d'une application tierce 400 qui vise à fournir un contenu se substituant à celui dudit courrier électronique pour présentation au récepteur 400. La substitution peut être totale ou partielle.

Cette application tierce 400 est identifiée au moyen d'un identifiant véhiculée par un indicateur insérée par l'émetteur 100 au sein du courrier électronique, notamment en tant qu'entête.

Cet identifiant peut être une adresse, typiquement une URL (pour « Uniform Resource Locator » en langue anglaise. D'autres types d'identifiants de l'application tierce sont possibles. Par exemple, la boite personnelle 300 peut être associée à une table de références, mettant en correspondance des identifiants à des adresses. L'indicateur peut alors contenir un identifiant d'applications qui n'est pas une adresse.

Cet indicateur peut être un entête du courrier électronique, conforme au protocole MIME (pour « Multipurpose Internet Mail Extensions », en langue anglaise).

Selon le mode de réalisation précédemment évoqué, cet indicateur est crypté par l'émetteur 100 au moyen d'un secret préalablement fourni par le serveur gérant la boîte personnelle 300. De la sorte, le récepteur n'a pas connaissance de l'adresse de l'application tierce 400, limitant ainsi les risques au cas où ce récepteur serait animé d'intentions malfaisantes, mais aussi, cela permet de se prémunir d'une transmission malveillante d'un courrier électronique puisqu'on a alors assurance que l'émetteur et la boîte personnelle disposent d'un même secret partagé. Il est possible de révoquer le secret, en cas d'usurpation ou de compromission au sein de des infrastructures de l'émetteur par exemple.

Ce secret partagé peut être, comme on l'a vu précédemment, une clé fournie par l'hébergeur de la boite à l'émetteur 100. Celui-ci peut alors s'en servir pour crypter les entêtes des courriers électroniques destinés aux boites personnelles hébergés par le même serveur web.

Le courrier électronique peut donc contenir un entête constitué d'une métadonnée signalant que ce qui suit est un indicateur contenant par exemple l'adresse d'une application tierce.

Ainsi, cet entête peut prendre pour forme :
X-WMD-dynamail:
U2FsdGVkX1950K2B1q1FKz1pC20GfihPHpUXWTVOLLdku817dn02mU KCtD8+0Fth

La métadonnée, ou mot-clé, « X-WMD-dynamail », indique selon le formalisme du protocole MIME que l'entête doit être traité selon le mécanisme de l'invention. Aussi, le serveur gérant la boîte personnelle 300 doit être prévu pour détecter la présence d'un tel entête (grâce à l'utilisation d'un tel mot-clé), et pour le traiter correctement.

Le nom de l'entête, « X-WMD-dynamail » est bien entendu donné à titre indicatif. Tout nom, non déjà utilisé ou standardisé, peut être employé dès lors qu'il est partagé entre les parties.

Le traitement de cet entête comprend, dans ce cas, son décryptage en utilisant le secret partagé avec l'émetteur 100. Une fois décrypté, l'entête permet d'accéder à un identifiant (par exemple l'adresse) de l'application tierce 400.

Le serveur gérant la boîte personnelle 300 peut alors déclencher l'exécution de l'application tierce 400 ainsi identifiée, et substituer tout ou partie du contenu statique du courrier électronique par un contenu fourni, dynamiquement par l'application tierce 400.

Le même courrier électronique étant transmis à plusieurs récepteurs, certains peuvent le consulter via une boîte personnelle ne mettant pas en place les mécanismes de l'invention, c'est-à-dire ne prenant pas en compte l'entête véhiculant un identifiant d'application tierce. Dans ce cas, le contenu statique du message électronique sera affiché.

Il en va de même lorsque le courrier électronique est consulté au moyen d'un client lourd de messagerie.

Autrement dit, du point de vue de l'émetteur, deux versions du message électronique peuvent être définies :
- une statique, véhiculée par le corps du courrier électronique ;
- une dynamique, dont le contenu est substitué au corps du courrier électronique pour l'affichage au récepteur, et fourni par l'application tierce 400.

Selon un mode de réalisation de l'invention, la boîte personnelle prévoit de déterminer qu'un courrier électronique donné contient un contenu dynamique et, auquel cas, d'afficher un pictogramme en regard de ce courrier électronique. Le récepteur pourra ainsi avoir connaissance qu'un courrier contient du contenu dynamique avant même de l'ouvrir.

Pour ce faire, le serveur gérant la boîte personnelle peut déterminer pour chaque message la présence d'un indicateur (entête...) contenant l'identifiant d'une application tierce 400, et, en ce cas, insérer le pictogramme approprié, ou tout autre indicateur visuel, en regard du courrier électronique correspondant de la liste.

Lors du déclenchement de l'exécution de l'application tierce, le serveur gérant la boîte personnelle 300 peut lui transmettre un élément d'authentification du récepteur. Cela permet de sécuriser les échanges et permet d'éviter qu'une application tierce affiche des données propres à un récepteur donné, alors que le courrier électronique est consulté par un autre récepteur (en cas de transfert de courrier, par exemple).

L'élément d'authentification peut aussi être fourni par un fournisseur d'identité dans le cas d'une authentification par SSO (pour « *Single Sign-On* » en anglais).

L'application tierce peut être hébergée sur un serveur applicatif distant. Il peut notamment s'agir d'une application web, de type « web service ». De façon classique en soit, elle reçoit une requête du serveur gérant la boîte personnelle 300 et formulée selon l'identifiant contenu dans le courrier électronique, et retourne une réponse véhiculant le contenu. La requête et la réponse peuvent être conformes au protocole HTTP.

La connexion peut aussi être directe entre le navigateur de l'utilisateur final et le serveur de l'application tierce.

L'application tierce peut fournir un contenu qui est fonction de différents paramètres liés notamment au contexte et au récepteur. Ainsi, le contenu dynamique que permet le mécanisme de l'invention peut être contextualisé et/ou personnalisé.

L'application tierce 400 peut disposer de différents moyens pour fournir un contenu dynamique. Elle peut avoir connaissance du récepteur 200 et adapter le contenu en fonction d'un profil de ce récepteur.

Elle peut avoir connaissance de données météorologiques et notamment géolocalisées en fonction du récepteur 200, et adapter le contenu à cette information. On peut par exemple citer l'exemple d'un courrier d'information d'une société vendant des vêtements, dont les produits mis en avant dans le contenu du courrier peuvent ainsi dépendre de la météo, du sexe du récepteur, de sa tranche d'âges, etc.

Il est aussi possible d'accéder via l'application à des contenus appartenant à l'utilisateur, tels que des pièces jointes des autres emails stockés dans la boite ou des photos stockés sur son espace de stockage en ligne (« cloud »).

En outre, le contenu peut être adapté à la date (jour / heure) à laquelle le courrier électronique est consulté, alors qu'un courrier électronique statique ne peut dépendre que de la date d'émission. L'expérience montre que plusieurs jours, voire plusieurs semaines ou mois, peuvent s'écouler entre l'émission d'un courrier électronique et sa consultation (c'est-à-dire sa réception par le récepteur final). Dès lors, pouvoir adapter le contenu présenté au récepteur 200 à la date de consultation présente un avantage certain.

De même, l'application tierce 400 peut avoir connaissance d'événements et adapter le contenu à la survenance de tels événements, y compris postérieurs à l'émission du courrier.

L'application tierce peut également fournir un contenu permettant une interaction avec le récepteur. Ainsi, le récepteur peut agir sur le contenu affiché et ainsi provoquer une modification de ce contenu, voir l'affichage d'un nouveau contenu.

Par exemple, un questionnaire peut être affiché. Une fois que le récepteur a rempli ce questionnaire, un résultat peut être immédiatement affiché. Il est ainsi possible de mettre en place des campagnes d'enquêtes, ou bien des jeux-concours, permettant aux récepteurs d'avoir connaissance du résultat sans même sortir du courrier électronique consulté.

Un tel questionnaire peut être mis en œuvre via un contenu exprimé en langage HTML (HyperText Markup Language).

D'autres contenus interactifs peuvent être mis en œuvre via des applets Java, des modules programmés en langage Flash, etc., tout en conservant de bonnes conditions de sécurité, basées sur la confiance vis-à-vis de l'éditeur de l'application tierce à qui il a été fourni une clef partagée

En fait, l'utilisation d'une application tierce 400, hébergée sur un serveur, permet un large spectre de possibilités, tout en maintenant le contenu dans le corps du courrier électronique. Ainsi, le récepteur a le sentiment de consulter un courrier électronique, alors que son contenu est fourni, dynamiquement, par une application qui peut correspondre à un site web.

Bien entendu, la présente invention n'est pas limitée aux exemples et au mode de réalisation décrits et représentés, mais elle est susceptible de nombreuses variantes accessibles à l'homme de l'art.

## Revendications

1. Procédé de transmission d'un courrier électronique entre un émetteur (100) et un récepteur (200), comportant
- l'insertion en tant qu'entête dudit courrier d'un indicateur contenant l'adresse d'une application tierce (400), par ledit émetteur, et sa transmission vers une boîte personnelle (300) dudit récepteur, gérée par un serveur et accessible par un terminal de communication associé audit récepteur, et
- l'accès par ledit récepteur à ladite boîte personnelle, ladite boite personnelle déclenchant à la lecture dudit courrier électronique l'exécution de ladite application tierce qui fournit alors, en réponse à une requête formulée selon ladite adresse, un contenu se substituant à celui dudit courrier électronique pour présentation audit récepteur.

2. Procédé selon la revendication précédente, dans lequel ladite application tierce (400) fournit un contenu fonction d'un paramètre parmi la date, un profil dudit récepteur, des données météorologiques, un événement, un accès à des données appartenant au récepteur, ...

3. Procédé selon l'une des revendications précédentes, dans lequel ledit contenu permet une interaction avec ledit récepteur (200).

4. Procédé selon l'une des revendications précédentes dans lequel le serveur gérant ladite boîte personnelle transmet un élément d'authentification dudit récepteur à ladite application tierce (400).

5. Procédé selon l'une des revendications précédentes, dans lequel ledit indicateur est crypté par ledit émetteur au moyen d'un secret partagé préalablement fourni par ledit serveur gérant ladite boîte personnelle.

6. Procédé selon l'une des revendications précédentes, dans lequel ledit récepteur peut accéder à une liste des courriers électroniques disponibles dans ladite boîte personnelle, dans laquelle un pictogramme est affiché en regard des courriers électroniques dans lesquels a été inséré un indicateur contenant l'adresse d'une application tierce.

7. Programme d'ordinateur comportant du code exécutable par un équipement numérique pour mettre en œuvre le procédé selon l'une des revendications précédentes.

8. Serveur gestionnaire d'une boite personnelle (300) pour le stockage de courriers électronique, comportant des moyens de réception d'un courrier électronique destiné à un récepteur (200) et comportant dans un entête un indicateur contenant l'adresse d'une application tierce (400), et des moyens pour, lorsque ledit récepteur y accède, déclencher l'exécution de ladite application tierce qui fournit alors en réponse à une requête formulée selon ladite adresse un contenu se substituant à celui dudit courrier électronique pour présentation audit récepteur.

## Patentansprüche

1. Verfahren zum Übertragen einer E-Mail zwischen einem Sender (100) und einem Empfänger (200), Folgendes beinhaltend
- Einfügen, als Kopf der Mail, eines Indikators, der die Adresse einer externen Anwendung (400) enthält, durch den Sender, und deren Übertragung zu einer persönlichen Box (300) des Empfängers, die durch einen Server verwaltet wird, und auf die durch ein dem Empfänger zugeordnetes Kommunikationsendgerät zugreifbar ist, und
- Zugreifen durch den Empfänger auf die persönliche Box, wobei die persönliche Box beim Lesen der E-Mail die Ausführung der externen Anwendung auslöst, die somit als Antwort auf eine entsprechend der Adresse formulierte Anfrage einen Inhalt bereitstellt, der zur Präsentation an den Empfänger an die Stelle jenes der E-Mail tritt.

2. Verfahren nach dem vorstehenden Anspruch, wobei die externe Anwendung (400) einen von einem Parameter aus dem Datum, einem Profil des Empfängers, den meteorologischen Daten, einem Ereignis, einem Zugriff auf Daten, die dem Empfänger gehören..., abhängigen Inhalt bereitstellt.

3. Verfahren nach einem der vorstehenden Ansprüche, wobei der Inhalt eine Interaktion mit dem Empfänger (200) erlaubt.

4. Verfahren nach einem der vorstehenden Ansprüche, wobei der Server, der die persönliche Box verwaltet, ein Authentifizierungselement des Empfängers an die externe Anwendung (400) überträgt.

5. Verfahren nach einem der vorstehenden Ansprüche, wobei der Indikator durch den Sender anhand eines gemeinsamen Geheimnisses verschlüsselt ist, das zuvor von dem Server, der die persönliche Box verwaltet, bereitgestellt wird.

6. Verfahren nach einem der vorstehenden Ansprüche, wobei der Empfänger auf eine Liste der in der persönlichen Box verfügbaren E-Mails zugreifen kann, in der ein Piktogramm gegenüber den E-Mails angezeigt wird, in welche ein Indikator eingefügt worden ist, der die Adresse einer externen Anwendung enthält.

7. Computerprogramm, einen Code umfassend, der durch eine digitale Ausrüstung ausführbar ist, um das Verfahren nach einem der vorstehenden Ansprüche umzusetzen.

8. Verwaltungsserver einer persönlichen Box (300) zum Ablegen von E-Mails, der Mittel zum Empfangen einer E-Mail beinhaltet, die für einen Empfänger (200) bestimmt ist, und in einem Kopf einen Indikator beinhaltend, der die Adresse einer externen Anwendung (400) enthält, und Mittel, um, wenn der Empfänger darauf zugreift, die Ausführung der externen Anwendung auszulösen, die somit als Antwort auf eine entsprechend der Adresse formulierte Anfrage einen Inhalt bereitstellt, der zur Präsentation an den Empfänger an die Stelle jenes der E-Mail tritt.

## Claims

1. A method of transmitting an electronic mail between a sender (100) and a receiver (200), comprising
- the insertion as a header of said mail of an indicator containing the address of a third party application (400), by said sender, and its transmission to a personal box (300) of said receiver, managed by a server and accessible by a communication terminal associated with said receiver, and
- the access by said receiver to said personal mailbox, said personal mailbox triggering the execution of said third party application upon reading said e-mail, which then provides, in response to a request formulated according to said address, a content replacing that of said e-mail for presentation to said receiver.

2. A method according to the previous claim, wherein said third party application (400) provides a content depending on a parameter among the date, a profile of said receiver, weather data, an event, access to data belonging to the receiver, ...

3. A method according to one of the foregoing claims, wherein said content enables interaction with said receiver (200).

4. A method according to one of the foregoing claims wherein the server managing said personal box transmits an authentication element from said receiver to said third party application (400).

5. A method according to one of the preceding claims, wherein said indicator is encrypted by said sender by means of a shared secret previously provided by said server managing said personal box.

6. A method according to one of the preceding claims, in which said receiver can access a list of e-mails available in said personal mailbox, in which a pictogram is displayed next to e-mails in which an indicator containing the address of a third-party application has been inserted.

7. A computer program containing code executable by digital equipment to carry out the process according to one of the preceding claims.

8. Server managing a personal mailbox (300) for storing electronic mail, comprising means for receiving an electronic mail intended for a receiver (200) and comprising in a header an indicator containing the address of a third party application (400), and means for, when said receiver accesses it, triggering the execution of said third party application which then provides in response to a request formulated according to said address a content replacing that of said electronic mail for presentation to said receiver.
